Europäisches Patentamt

European Patent Office

Office européen des brevets

(19)

(11) Veröffentlichungsnummer: **0 401 719**

**A2**

## (12) EUROPÄISCHE PATENTANMELDUNG

(21) Anmeldenummer: **90110527.0**

(22) Anmeldetag: **02.06.90**

(51) Int. Cl.⁵: **B23Q 3/00**

(30) Priorität: **09.06.89 DE 3918902**

(43) Veröffentlichungstag der Anmeldung:
**12.12.90 Patentblatt 90/50**

(84) Benannte Vertragsstaaten:
**AT CH DE ES FR GB IT LI SE**

(71) Anmelder: **Gebr. Heller Maschinenfabrik GmbH**
**Postfach 1428 Neuffener Strasse 54**
**D-7440 Nürtingen(DE)**

(72) Erfinder: **Schweizer, Ernst**
**Am Lerchenberg 49**
**D-7440 Nürtingen(DE)**
Erfinder: **Kalestra, Horst**
**Birkenstrasse 4**
**D-7441 Neckartenzlingen(DE)**

(74) Vertreter: **Jackisch-Kohl, Anna-Katharina et al**
**Patentanwälte Jackisch-Kohl & Kohl**
**Stuttgarter Strasse 115**
**D-7000 Stuttgart 30(DE)**

(54) Wechseleinrichtung für Werkzeugspindelträger an einer Bearbeitungsmaschine.

(57) Die Wechseleinrichtung hat zwei Halterungen (10), an die Aufnahmeteile (57, 58) von Werkzeugspindelträgern (6) anhängbar sind. Die Wechseleinrichtung wird durch einen Antrieb (23) verstellt. Die Halterungen (10) sind an zwei Greiferarmen (11, 12) vorgesehen, die synchron um jeweils eine vertikale Achse (19, 20) schwenkbar sind. An den freien Enden der Greiferarme (11, 12) ist jeweils eine der Halterungen (10) um eine parallel zur vertikalen Schwenkachse (19, 20) parallele Achse (25) drehbar gelagert. Die Halterung (10) ist als Drehkörper ausgebildet, der starre Griffleisten (53, 54) aufweist, auf welche die Aufnahmeteile (57, 58) zur hängenden Lagerung der Werkzeugspindelträger (6) auflegbar sind. Die Griffleisten (53, 54) sind zwischen die Aufnahmeteile (57, 58) einführbar. Diese Wechseleinrichtung ist konstruktiv einfach ausgebildet und nimmt nur wenig Raum in Anspruch.

F i g.2

Fig.9

## Wechseleinrichtung für Werkzeugspindelträger an einer Bearbeitungsmaschine

Die Erfindung betrifft eine Wechseleinrichtung für Werkzeugspindelträger an einer Bearbeitungsmaschine nach dem Oberbegriff des Anspruches 1.

Solche Wechseleinrichtungen dienen dazu, mit Werkzeugen bestückte Werkzeugspindelträger von einem Speicher- bzw. Ablageplatz aus zu einer Antriebseinheit der Bearbeitungsmaschine und umgekehrt zu transportieren. Bekannte Wechseleinrichtungen sind als Ringe ausgebildet, die einen Ständer der Bearbeitungsmaschine umgeben und längs dem die Halterung für die Aufnahmeteile der Werkzeugspindelträger angeordnet sind. Sollen die Werkzeugspindelträgr gewechselt werden, wird dieser Ring um seine Achse gedreht. Diese Wechseleinrichtung ist verhältnismäßig groß und benötigt infolge ihres großen Durchmessers entsprechend großen Platz. Darum lassen sich solche Wechseleinrichtungen nur dort einsetzen, wo auch ein entsprechender Raum zur Verfügung steht.

Es ist ferner eine Wechseleinrichtung bekannt (DE-OS 37 31 380), mit der aber keine Werkzeugspindelträger, sondern nur Einzelwerkzeuge gewechselt werden können. Die Wechseleinrichtung ist nur mit einer einzigen Halterung versehen, so daß nur ein einziges Einzelwerkzeug gehandhabt werden kann. Die Halterungen sind als Schwenkkörper ausgebildet, die von der Schwenkachse aus verhältnismäßig weit abstehen. Darüber hinaus hat die Halterung seitlich auslenkbare Greifer, die durch eine Feder unter Vorspannung gehalten werden. Infolge der beweglichen Teile hat die Wechseleinrichtung auch einen konstruktiv aufwendigen Aufbau und ist störanfällig.

Bei einer anderen bekannten Wechseleinrichtung (DD-PS 228 206) werden mit zwei Halterungen Paletten mit Werkstücken gehandhabt. Die Halterungen werden zeitlich nacheinander verschwenkt, um zunächst mit der ersten Halterung eine Palette mit den bearbeiteten Werkstücken zu ergreifen und aus einer Oberflächenbehandlungsanlage herauszufahren, um sie auf dem Ablagetisch abzusetzen. Anschließend wird mit der zweiten Halterung die mit zu bearbeitenden Werkstücken belegte zweite Palette von einem Ablagetisch gehoben und in die Oberflächenbehandlungsanlage gefahren. Die Wechselzeiten sind verhältnismäßig lang, weil die beiden Halterungen nacheinander tätig sind. Außerdem sind die Halterungen wiederum Schwenkarme, die von ihrer Schwenkachse weit vorstehen, so daß sie beim Schwenkvorgang eine große Fläche bestreichen. Darum kann auch diese Wechseleinrichtung nur dort eingesetzt werden, wo entsprechender Platz vorhanden ist.

Der Erfindung liegt die Aufgabe zugrunde, die gattungsgemäße Wechseleinrichtung so auszubilden, daß sie bei konstruktiv einfacher Ausbildung nur einen geringen Platzbedarf hat und dennoch mit ihr die Werkzeugspindelträger problemlos zwischen der Antriebseinheit und dem Ablageplatz transportiert werden können.

Diese Aufgabe wird bei der gattungsgemäßen Wechseleinrichtung erfindungsgemäß mit den kennzeichnenden Merkmalen des Ansprüches 1 gelöst.

Mit den beiden synchron um die vertikalen Achsen schwenkbaren Greiferarme werden zwei Werkzeugspindelträger gleichzeitig transportiert, wobei der Werkzeugspindelträger des einen Greiferarmes von der Antriebseinheit zum Ablageplatz und der Werkzeugspindelträger des anderen Greiferarmes von einem anderen Ablageplatz zur Antriebseinheit transportiert wird. Infolge der synchronen Verstellung beider Greiferarme wird für die Auswechslung nur wenig Zeit benötigt. Die an den freien Enden der Greiferarme vorgesehenen Halterungen sind als kompakte Drehkörper ausgebildet, die keine Schwenk-, sondern nur noch eine Drehbewegung um ihre Achsen ausführen. Die Halterungen bestreichen darum nur eine Fläche, die ihrer Projektionsfläche in einer Horizontalebene entspricht. Mit den Halterungen können die Werkzeugspindelträger auch noch in die gewünschte Lage gedreht werden. Auf den starren Griffleisten der Halterungen lassen sich die Werkzeugspindelträger mit ihren Aufnahmeteilen zuverlässig auflagern, so daß sie während des Transportes von der Antriebseinheit zum Ablageplatz und umgekehrt zuverlässig in den Halterungen hängen. Die Griffleisten stellen konstruktiv einfache Bauteile dar, die einfach und wirtschaftlich gefertigt werden können. Bei den Griffleisten und Aufnahmeteilen handelt es sich um unbewegliche Konstruktionsteile, die für die Kupplung zwischen Halterung und Werkzeugspindelträger keine Greifbewegungen oder dgl. ausführen müssen. Darum sind für die Griffleisten und Aufnahmeteile auch keine entsprechenden Antriebe oder beweglichen Bauteile erforderlich. Die erfindungsgemäße Wechseleinrichtung zeichnet sich darum durch einen konstruktiv sehr einfachen und damit wenig störanfälligen Aufbau aus.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen:

Fig. 1 in Seitenansicht eine Bearbeitungsmaschine mit einer erfindungsgemäßen Wechseleinrichtung,

Fig. 2 eine Ansicht in Richtung des Pfeiles II in Fig. 1,

Fig. 3 eine Draufsicht auf die Bearbeitungsmaschine gemäß Pfeil III in Fig. 1,

Fig. 4 in einer Darstellung entsprechend Fig. 3 eine Bearbeitungsmaschine mit einem Speichersystem,

Fig. 5 die Wechseleinrichtung, deren Greiferarme die eine Endstellung einnehmen,

Fig. 6 die Wechseleinrichtung gemäß Fig. 5, deren Greiferarme die andere Endstellung einnehmen,

Fig. 7 den Bewegungsablauf beim Schwenken der Greiferarme der erfindungsgemäßen Wechseleinrichtung,

Fig. 8 in vergrößerter Darstellung einen Schnitt längs der Linie VIII-VIII in Fig. 7,

Fig. 9 in vergrößerter Darstellung eine Greiferhand der erfindungsgemäßen Wechseleinrichtung, in die Aufnahmebolzen eines Werkzeugträgers eingefahren sind,

Fig. 10 einen Schnitt längs der Linie X-X in Fig. 9.

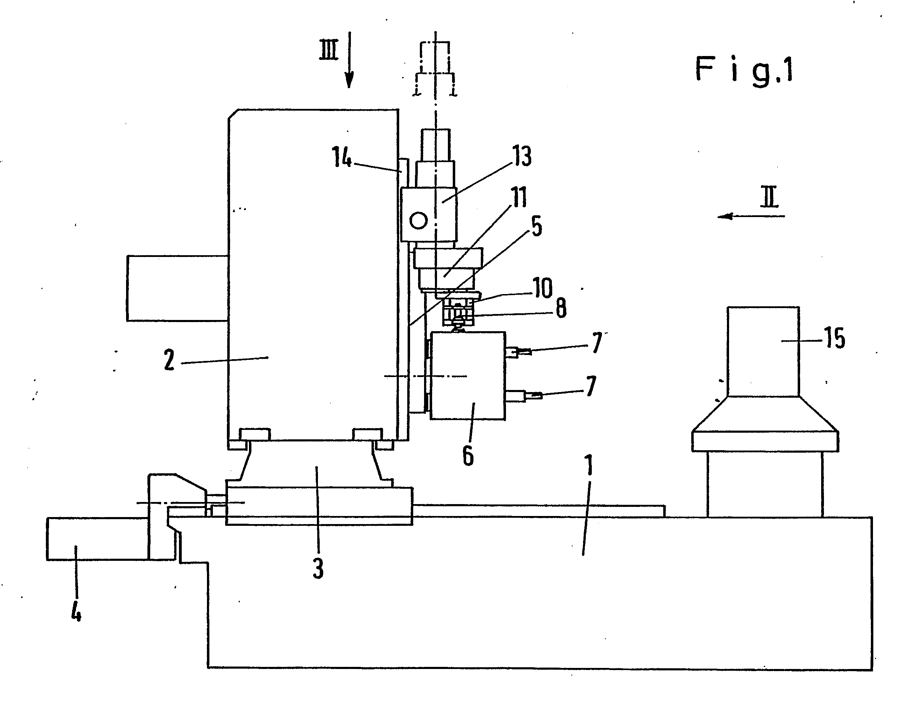

Die Bearbeitungsmaschine gemäß Fig. 1 hat ein Maschinenbett 1, auf dem über eine Schlitteneinheit 3 ein Ständer 2 verfahrbar ist. Zum Antrieb der Schlitteneinheit 3 auf dem Maschinenbett 1 dient ein Motor 4. Auf der Schlitteneinheit 3 ist der Ständer 2 quer zur Verfahrrichtung der Schlitteneinheit seinerseits verfahrbar. Der Ständer 2 ist mit einer Antriebseinheit 5 versehen, an die in bekannter Weise Werkzeugträger 6 gekuppelt werden können. Die im Werkzeugspindelträger 6 gelagerten Werkzeuge 7 werden dann von der Antriebseinheit 5 aus in bekannter Weise drehbar angetrieben. Jeder Werkzeugspindelträger 6 weist auf seiner Oberseite zwei Aufnahmebolzen 8 und 9 auf, mit denen er in einer Greiferhand 10 von Greiferarmen 11 und 12 gehaltert wird. Die beiden Greiferarme 11, 12 sind an einer Lagerbrücke 13 gelagert, die entweder am Ständer 2 fest angeordnet oder an der Antriebseinheit 5 vorgesehen sein kann, die längs vertikaler Führungen 14 verfahrbar ist.

Der Ständer 2 wird über den Motor 4 in Richtung auf das zu bearbeitende Werkstück 15 gefahren, das mit den Werkzeugen 7 des mit der Antriebseinheit 5 gekuppelten Werkzeugträgers 6 bearbeitet wird. Da der Ständer 2 quer zur Fahrrichtung der Schlitteneinheit 3 verstellbar und außerdem die Antriebseinheit 5 mit dem Werkzeugspindelträger 6 in Höhenrichtung verstellbar ist, können die Werkzeuge 7 exakt in die gewünschte Bearbeitungsposition gebracht werden.

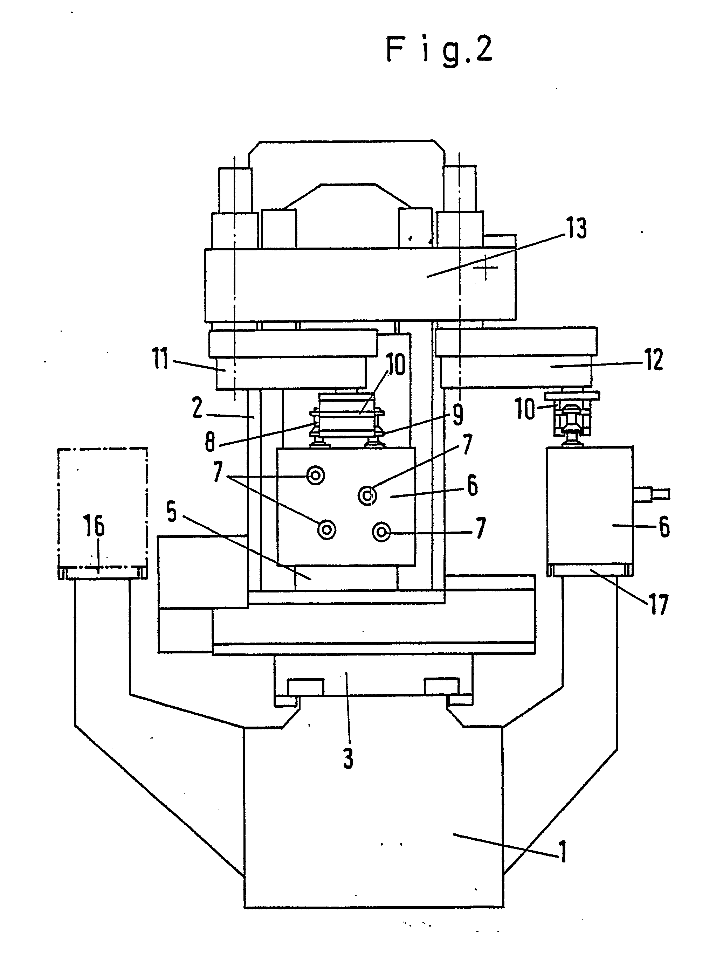

Wie Fig. 2 zeigt, befindet sich beiderseits des Maschinenbettes 1 jeweils ein Ablageplatz 16 und 17 für die Werkzeugträger 6.

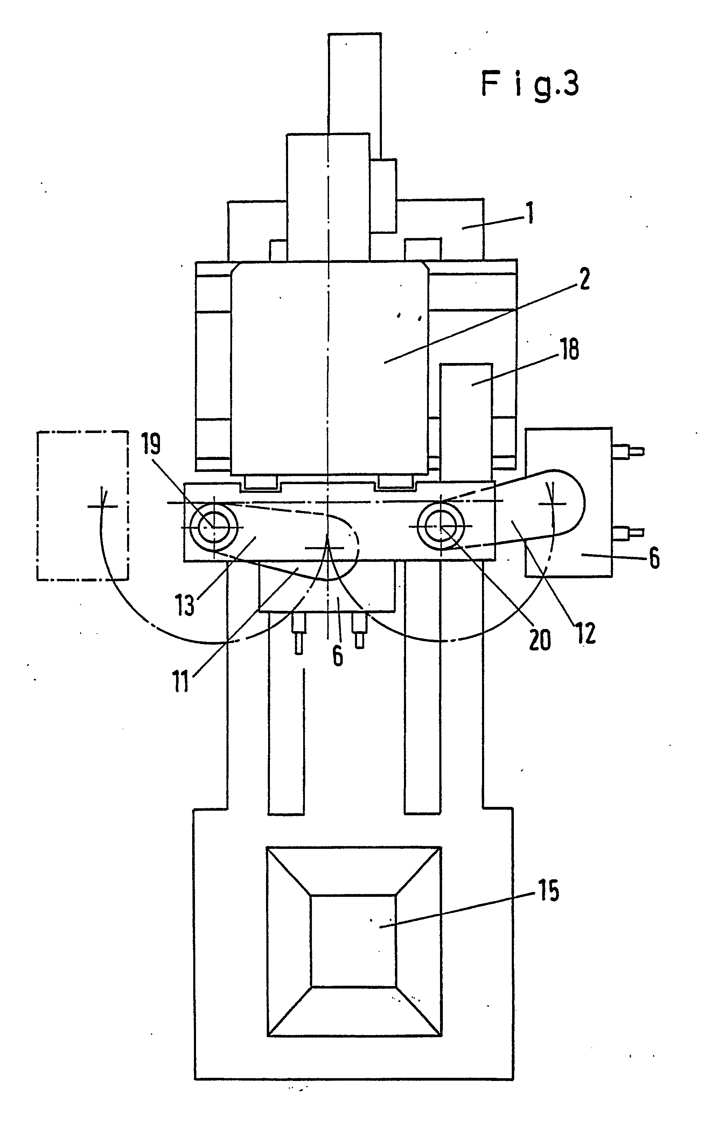

Zum Antrieb der beiden Greiferarme 11, 12 dient ein Schwenkantrieb 18, mit dem die Greiferarme um die vertikalen Achsen 19 und 20 geschwenkt werden können (Fig. 3). Da an dieser Bearbeitungsmaschine nur zwei Ablageplätze 16 und 17 vorgesehen sind, können auch nur zwei Werkzeugspindelträger 6 eingesetzt werden.

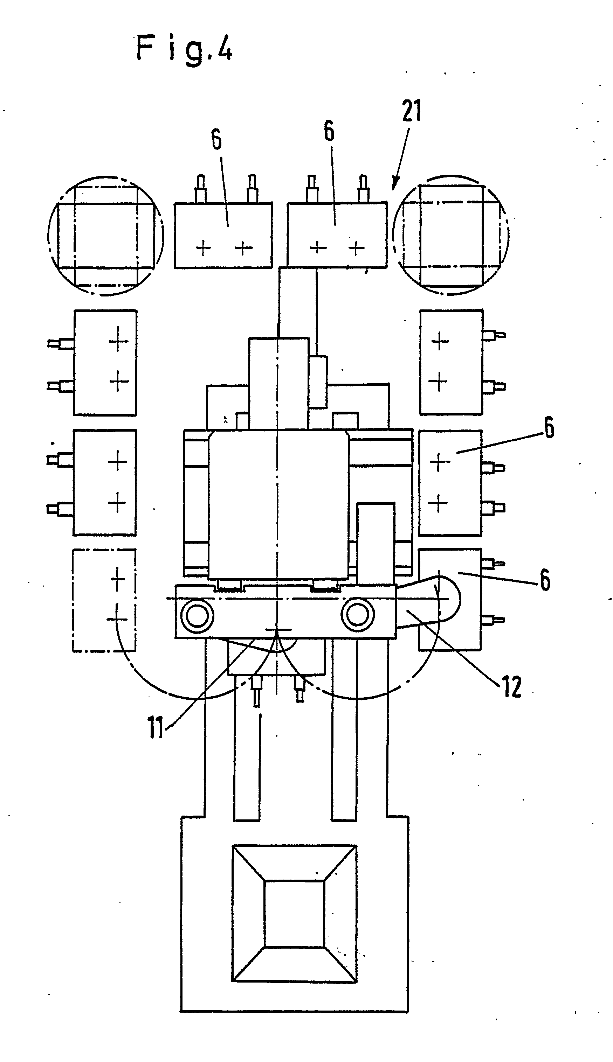

Fig. 4 zeigt die Möglichkeit, die Bearbeitungsmaschine in Verbindung mit einem Speichersystem 21 für die Werkzeugträger 6 einzusetzen. Mit den Greiferarmen 11 und 12 wird der jeweilige Werkzeugspindelträger 6 im Speichersystem 21 abgelegt und aus ihm herausgenommen. Der abgelegte Werkzeugspindelträger 6 kann innerhalb des Speichersysteme 21 weitergetaktet werden. Ebenso ist es möglich, einen entsprechend neuen Werkzeugspindelträger in den Aufnahmebereich des jeweiligen Greiferarmes vorzutakten. Im übrigen ist die Bearbeitungsmaschine gemäß Fig. 4 gleich ausgebildet wie das Ausführungsbeispiel nach den Fig. 1 bis 3.

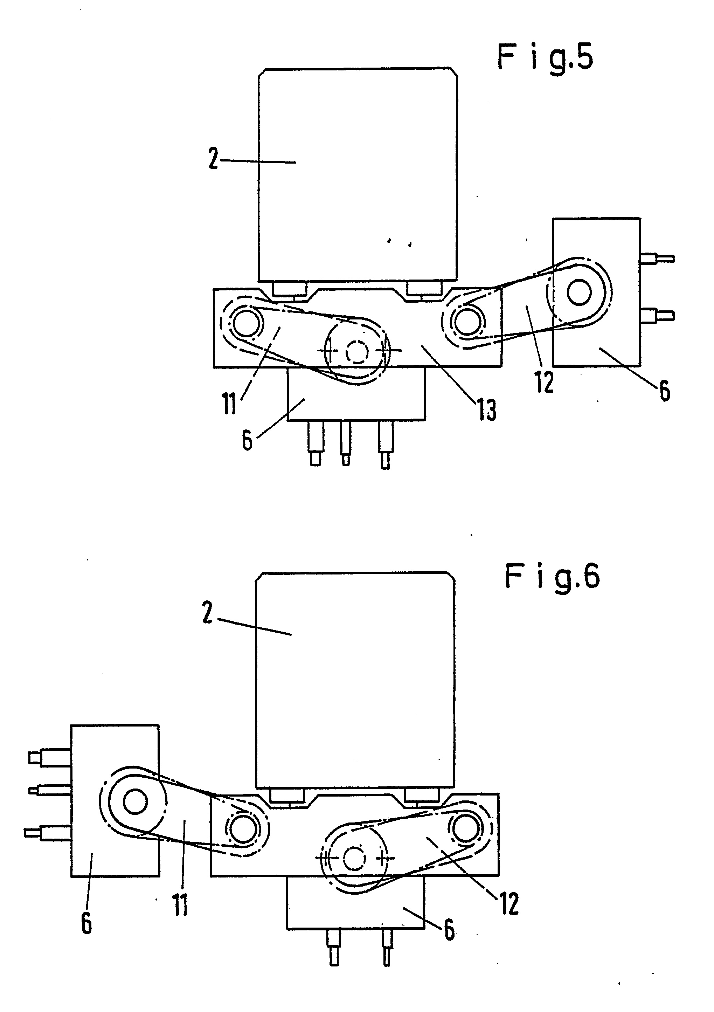

Die Fig. 5 und 6 zeigen die beiden Endstellungen der Greiferarme 11 und 12 in bezug auf die Lagerbrücke 13. Bei der Darstellung gemäß Fig. 5 ist der Greiferarm 11 in Richtung auf den Ständer 2 zurückgeschwenkt, wobei der an ihm aufgehängte Werkzeugspindelträger 6 mit der Antriebseinheit 5 gekuppelt ist. Der andere Greiferarm 12 ist nach außen geschwenkt und trägt ebenfalls einen Werkzeugträger 6, der entweder auf dem Ablageplatz 17 (Fig. 2) oder auf einem Ablageplatz im Speichersystem 21 (Fig. 4) abgelegt ist.

Durch den Schwenkantrieb 18 werden im Ausführungsbeispiel nach den Fig. 5 und 6 beide Greiferarme 11 und 12 synchron um 180° in die in Fig. 6 dargestellte Lage geschwenkt. Der Greiferarm 12 wird hierbei in Richtung auf den Ständer 2 geschwenkt, so daß der an ihm hängende Werkzeugspindelträger 6 an die Antriebseinheit 5 gekuppelt werden kann. Der andere Greiferarm 11 ist um 180° nach außen geschwenkt worden, so daß der an ihm hängende Werkzeugspindelträger 6 auf dem Ablageplatz 16 (Fig. 2) oder auf einem Ablageplatz im Speichersystem (21) Fig. 4 abgelegt werden kann.

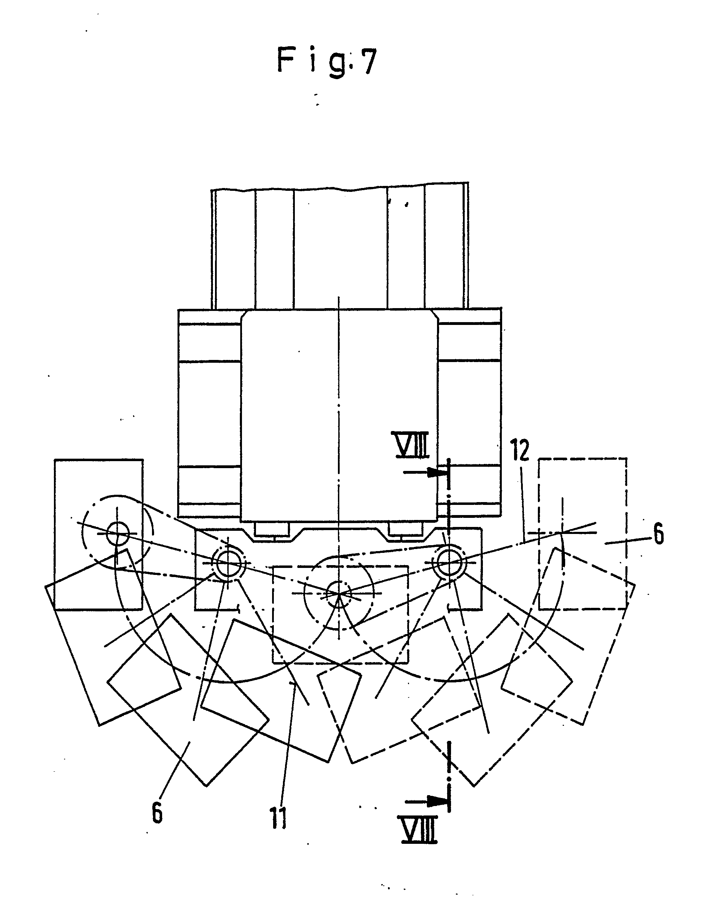

Wie sich aus Fig. 7 ergibt, wird der Werkzeugspindelträger 6 während der 180°-Schwenkung der Greiferarme 11, 12 seinerseits um 90° geschwenkt. In der Ablagestellung ist der Werkzeugträger 6 so angeordnet, daß seine Werkzeuge 7 auf der von der Bearbeitungsmaschine abgewandten Seite angeordnet sind. Dadurch sind die Werkzeuge in der Ablagestellung zum Auswechseln einfach zugänglich. Beim Verschwenken der Greiferarme 11, 12 werden die Werkzeugträger 6 bei ihrem Weg vom Ablageplatz zur Antriebseinheit 14 so geschwenkt, daß die Werkzeuge gegen das zu bearbeitende Werkstück 15 gerichtet sind und an die Antriebseinheit 5 angeschlossen werden können. Beim Schwenken der beiden Greiferarme 11, 12 um 180° werden die Greiferhände 10 im Verhältnis 1:2 um 90° zurückgedreht.

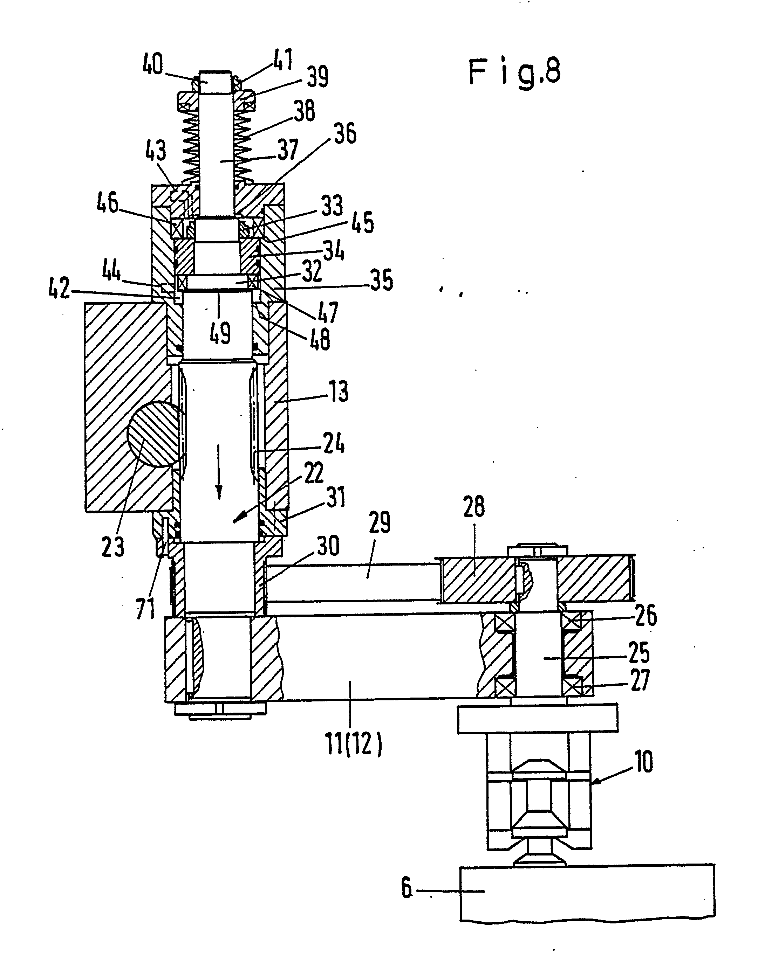

Der Antrieb zur 180°-Schwenkung der Greiferarme 11, 12 und der 90°-Drehung der Greiferhand 10 soll anhand der Fig. 8 näher erläutert werden. Die Lagerbrücke 13 wird von zwei Wellen 22 durchsetzt, auf deren nach unten aus der Lagerbrücke ragenden Enden die Greiferarme 11 und 12 drehfest sitzen. In der Lagerbrücke 13 ist eine Zahnstange 23 untergebracht, die mit einem Zahnradabschnitt 24 der Wellen 22 innerhalb der Lagerbrücke 13 in Eingriff ist. Durch Verschieben der Zahnstange 23 werden somit die beiden Wellen 22 um ihre Achsen gedreht, wodurch die drehfest auf ihnen sitzenden Greiferarme 11, 12 geschwenkt werden.

An dem von der Welle 22 abgewandten Ende werden die Greiferarme 11, 12 jeweils von einer weiteren Welle 25 durchsetzt, die an ihrem nach unten über den Greiferarm ragenden Ende die Greiferhand 10 drehfest trägt. Innerhalb des Greiferarmes 11, 12 ist die Welle 25 durch zwei mit Abstand übereinanderliegende Lager 26, 27 drehbar gelagert. Auf den nach oben über die Greiferarme 11, 12 ragenden Enden der Wellen 25 sitzt drehfest eine Zahnriemenscheibe 28, über die ein endloser Zahnriemen 29 geführt ist. Er umschlingt außerdem eine Zahnriemenhülse 30, die die Welle 22 umgibt und über eine Verdrehsicherung 71 drehfest, aber axial verschiebbar mit einer an der Unterseite der Lagerbrücke 13 befestigten Hülse 31 verbunden ist. Wird der Greiferarm 11, 12 geschwenkt, dann wälzt sich der Zahnriemen 29 auf der drehfesten Zahnriemenhülse 30 ab. Gleichzeitig wird durch den Zahnriemen 29 der Zahnriemenscheibe 28 eine entgegengerichtete Drehbewegung aufgezwungen. Aufgrund der Durchmesserverhältnisse von Zahnriemenhülse 30 zu Zahnriemenscheibe 28 ergibt sich das jeweilige Übersetzungsverhältnis und damit der Grad der Rückdrehung der Greiferhand 10. Beim beispielhaft gewählten Übersetzungsverhältnis von 1:2 ergibt sich eine 90°-Rückdrehung.

Auf der Welle 22 sitzt zwischen einem Bund 32 und einer Mutter 33 axial lagegesichert ein Kolben 34, mit dem die Welle 22 in Axialrichtung verschoben werden kann. Der Kolben 34 ist in einem Zylindergehäuse 35 untergebracht, das durch einen Deckel 36 geschlossen ist. Durch ihn ragt die Welle 22 mit einem im Durchmesser verringerten Ansatz 37. Er ist von einem Tellerfederpaket 38 umgeben, das sich auf dem Deckel 36 sowie an einem ringscheibenförmigen Widerlager 39 abstützt, das auf dem Ansatz 37 sitzt und durch eine auf das Gewindeende 40 des Ansatzes 37 geschraubte Mutter 41 gehalten ist.

In den Zylinderraum 42 münden oberhalb und unterhalb des Kolbens 34 Bohrungen 43 und 44 für die Zu- und Abführung des Hydraulikmediums. In Fig. 8 ist der Kolben 34 in seiner oberen Endlage dargestellt, in der er an einem zwischen dem Deckel 36 und einem Absatz 45 an der Innenseite des Zylindergehäuses 35 mit Axialspiel eingepaßten Axiallager 46 anliegt. In der unteren Lage kommt der Kolben 34 mit einem Axiallager 47 an einem Absatz 48 in der Innenwand des Zylindergehäuses 35 zur Anlage. Das Axiallager 47 ist zwischen dem Kolben 34 und einem Absatz 49 der Welle 22 angeordnet.

Der Zahnradabschnitt 24 auf den Wellen 22 ist ausreichend lang, so daß die Wellen 22 mit dem Hydraulikantrieb axial verschoben werden können, ohne daß der Eingriff mit der Zahnstange 23 verloren geht. Durch Axialverschieben der Wellen 22 können die in den Greiferhänden 10 der Greifer 11, 12 hängenden Werkzeugspindelträger 6 angehoben bzw. abgesenkt werden.

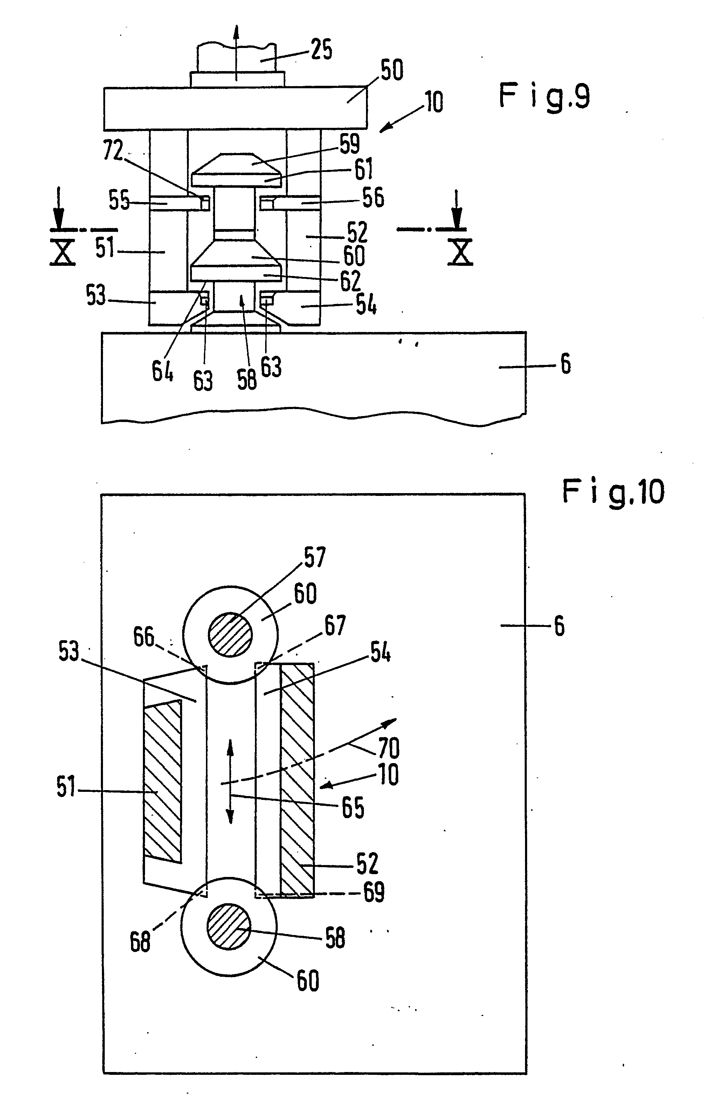

Da die Greiferhände 10 beider Greiferarme 11, 12 gleich ausgebildet sind, wird im folgenden anhand der Fig. 9 und 10 nur die eine Greiferhand näher beschrieben. Am unteren Ende der Welle 25 ist eine Tragplatte 50 befestigt, von der zwei mit Abstand voneinander liegende Platten 51 und 52 senkrecht nach unten abstehen. Die Platte 51 ist schmaler als die Platte 52 (Fig. 10). An der Unterseite beider Platten 51, 52 ist jeweils eine Griffleiste 53, 54 befestigt. Die Griffleiste 53 überragt die Platte 51 sowohl an den Schmalseiten als auch an der der Platte 52 zugewandten Vorderseite. Die Griffleiste 54 hat gleiche Länge wie die Platte 52 und ragt lediglich auf der der Platte 51 zugewandten Vorderseite über die Platte 52.

Mit Abstand oberhalb der Griffleiste 53, 54 sind die Platten 51, 52 mit jeweils einer weiteren Griffleiste 55 und 56 versehen, die in Draufsicht gleiche Ausbildung haben wie die unteren Griffleisten 54, 55.

Auf den Griffleisten 53, 54 stützen sich Aufnahmebolzen 57 und 58 ab, die auf der Oberseite des Werkzeugspindelträgers 6 vorgesehen sind. Die gleich ausgebildeten Aufnahmebolzen 57 und 58 weisen jeweils zwei Kegelstumpfabschnitte 59 und 60 auf, die sich nach unten verbreitern. Sie schließen jeweils an einen Zylinder 61, 62 an. Mit der ebenen Unterseite 64 liegen die Aufnahmebolzen 57, 58 auf den Griffleisten 53, 54 auf. Sie haben in den Eckbereichen 66 bis 69 Vertiefungen 63, auf deren Boden die Kegelstumpfabschnitte 60 mit ihren Unterseiten 64 aufliegen. Die Vertiefungen 63 sind den Kegelstumpfabschnitten 60 angepaßt, so daß die Werkzeugspindelträger 6 lagegesichert sind.

Der Abstand zwischen den jeweils auf gleicher Höhe einander gegenüberliegenden Griffleisten 53, 54 und 55, 56 ist größer als der Durchmesser der Aufnahmebolzen 57 und 58 im Bereich zwischen den Kegelstumpfabschnitten 59 und 60. Der Durchmesser der Kegelstumpfabschnitte 59, 60 der Aufnahmebolzen 57, 58 ist größer als der Abstand zwischen den Griffleisten 53 bis 56, jedoch kleiner als der Abstand zwischen den Platten 51 und 52. Dadurch ist gewährleistet, daß der Werkzeugspindelträger 6 mit seinen auf gleicher Höhe mit Abstand hintereinanderliegenden Aufnahmebolzen 57, 58 in Richtung des Doppelpfeiles 65 in die Greiferhand 10 der Greiferarme 11, 12 eingefahren bzw. herausgefahren werden kann. Die Kegelstumpfabschnitte 60 der Aufnahmebolzen 57, 58 liegen, wie Fig. 10 zeigt, mit den ebenen Unterseiten 64 lediglich in den Eckbereichen 66 bis 69 der Griffleisten 53, 54 auf. Da die Länge der Platte 51 kleiner ist als der Abstand zwischen den jeweiligen Kegelstumpfabschnitten 59, 60 der beiden Aufnahmebolzen 57, 58, kann die Greiferhand 10 auch quer zur Einfahrrichtung 65 (Pfeil 70 in Fig. 10) in die in Fig. 10 dargestellte Greifstellung bewegt werden. Die Kegelstumpfabschnitte 59 bilden Lagesicherungen, die in entsprechend angebrachte Aussparungen 72 an den Eckbereichen der Griffleisten 55, 56 eingreifen.

Um den Werkzeugspindelträger 6 zu fassen, werden die Greiferarme 11, 12 mit den Greiferhänden 10 durch den Hydraulikantrieb abgesenkt, indem der Kolben 34 nach unten verschoben wird. Hierbei wird das Tellerfederpaket 38 zusammengedrückt. In der abgesenkten Stellung können die Greiferhände 10 mit den Griffleisten 53 bis 56 unter die Kegelstumpfabschnitte 59, 60 der Aufnahmebolzen 57, 58 des Werkzeugspindelträgers 6 geschwenkt werden. Die Griffleisten haben dann Abstand von den Unterseiten der Kegelstumpfabschnitte 59, 60 (Fig. 9). Anschließend wird der Kolben 34 aufwärts bewegt, wodurch die Welle 22 und damit die Greiferarme 11, 12 mit den Greiferhänden 10 angehoben werden. Diese Hebebewegung wird durch das Tellerfederpaket 38 unterstützt. Die Griffleisten 53, 54 kommen an der Unterseite 64 zur Anlage und nehmen dann beim weiteren Anheben über die Aufnahmebolzen den Werkzeugspindelträger 6 mit. Er hängt dann unter seinem Gewicht auf den Griffleisten 53, 54 (Fig. 8). Das Tellerfederpaket 38 übernimmt die Sicherung des angehobenen Werkzeugspindelträgers 6. Um eine einwandfreie Lagesicherung des Werkzeugspindelträgers 6 in den Aufnahmebolzen 57, 58 sicherzustellen, sind die Auflagestellen 66 bis 69 auf der Oberseite der Griffleisten 53 bis 56 als Vertiefungen ausgebildet, so daß die Aufnahmebolzen bei hängendem Werkzeugspindelträger 6 nicht quer zu ihrer Achse verschoben werden können. Die Greiferarme 11, 12 lassen sich dann mit den an ihnen hängenden Werkzeugspindelträgern 6 mühelos schwenken.

Mit der beschriebenen Wechseleinrichtung mit den beiden Greiferarmen 11, 12 lassen sich die Werkzeugspindelträger 6, die mehrere Werkzeuge 7 tragen können, mühelos zwischen einem Ablageplatz und der Antriebseinheit 5 transportieren. Für das Wechseln des Werkzeugspindelträgers 6 wird keine separate Wechseleinrichtung benötigt, die neben oder hinter der Bearbeitungsmaschine angeordnet ist; die Wechseleinrichtung ist bei den beschriebenen und dargestellten Ausführungsformen vielmehr an der vertikal verfahrbaren Antriebseinheit 5 oder direkt am Ständer 2 vorgesehen, ohne daß zusätzlicher Platz für die Wechseleinrichtung benötigt wird. Die Zahnstange 23 zum Drehantrieb der beiden Wellen 22 kann beispielsweise durch einen Hydraulikzylinder axial verschoben werden. Es kann auch ein Motor zum Axialverschieben der Zahnstange 23 eingesetzt werden. Im beschriebenen und bevorzugten Ausführungsbeispiel werden die Greiferhände 10 während der Schwenkbewegung der Greiferarme 11, 12 um 90° zurückgedreht, so daß die Werkzeugspindelträger 6 in die richtige Ablage- bzw. Arbeitsposition gelangen. Die Spindeln der Werkzeugspindelträger 6 stehen dann senkrecht zur bzw. in Bearbeitungsrichtung. Bei dieser Schwenkbewegung legen die Werkzeugspindelträger 6 einen Schwenkwinkel von 90° zurück.

Da die Werkzeugspindelträger 6 nur durch ihr Gewicht formschlüssig in den Griffleisten 53 bis 56 gehalten sind, sind keine zusätzlichen beweglichen Verriegelungs- oder Aufnahmeeinrichtungen notwendig. Die Aufnahmebolzen 57, 58 können auch zur Aufnahme des Werkzeugspindelträgers 6 in einem übergeordneten Übersetzer, beispielsweise einem Portalkran, verwendet werden.

Die Wechseleinrichtung kann mit der Antriebseinheit 5 in Y-Richtung verfahren werden. Die Wechseleinrichtung kann aber auch in dieser Richtung fest am Ständer 2 vorgesehen sein. Die Wechseleinrichtung ist so ausgebildet, daß sie an jede Grundausrüstung einer Bearbeitungsmaschine angebaut werden kann. Dadurch ist diese Wechseleinrichtung bei einer einfachen einachsigen Bearbeitungsmaschine genauso verwendbar wie bei einer dreiachsigen Bearbeitungsmaschine. Die Spindeln des Werkzeugspindelträgers 6 können auch vertikal angeordnet sein. Auch in diesem Falle können die Werkzeugspindelträger 6 in der beschriebenen Weise mit den Greiferarmen 11, 12 gehandhabt werden.

Mit der Wechseleinrichtung sind äußerst kurze Wechselzeiten möglich, wobei sie kompakt ausgebildet ist und nur wenig Raum beansprucht. Wenn die Wechseleinrichtung an der Antriebseinheit 5 vorgesehen ist, können die Werkzeugträger 6 in jeder Höhe abgelegt werden. Durch die Wechseleinrichtung ist die Bearbeitungsmaschine mit beliebigen Werkzeugspindelträger-Speichersystemen verkettbar. Die Bearbeitungsmaschinen, an welche die Wechseleinrichtung angebaut werden kann, können nur eine Z- oder nur eine X- oder nur eine Y-Achse aufweisen. Sie kann aber auch eine Z- und eine Y-Achse oder eine Z- und eine Y-Achse haben. Schließlich kann die Bearbeitungsmaschine alle drei Achsen aufweisen. Hat die Bearbeitungsmaschine nur eine Verstellbarkeit in Z-Richtung, kann also der Ständer 2 nur gegen das zu bearbeitende Werkstück 15 verfahren werden, dann können die Greiferarme 11, 12 wesentlich kürzer sein als bei einer Bearbeitungsmaschine mit allen drei Achsen. Dadurch wird der Flugkreis der Greiferarme 11, 12 so klein wie möglich gehalten.

Sind die Spindeln der Werkzeugspindelträger vertikal angeordnet, dann benötigen die Ablageplätze entsprechende Aufnahmen für die nach unten ragenden Werkzeuge. In diesem Falle muß der Schwenkbewegung der Greiferarme 11, 12 keine Drehbewegung überlagert werden.

**Ansprüche**

1. Wechseleinrichtung für Werkzeugspindelträger an einer Bearbeitungsmaschine, mit zwei Halterungen, an die Aufnahmeteile der Werkzeugspindelträger anhängbar sind, und mit einem Antrieb zum Verstellen der Wechseleinrichtung,
dadurch gekennzeichnet, daß die Halterungen (10) an zwei Greiferarmen (11, 12) vorgesehen sind, die synchron um jeweils eine vertikale Achse (19, 20) schwenkbar sind, daß an den freien Enden der Greiferarme (11, 12) jeweils eine der Halterungen (10) um eine parallel zur vertikalen Schwenkachse (19, 20) parallele Achse (25) drehbar gelagert ist, und daß die Halterung (10) als Drehkörper ausgebildet ist, der starre Griffleisten (53, 54) aufweist, auf die die Aufnahmeteile (57, 58) zur hängenden Lagerung der Werkzeugspindelträger (6) auflegbar sind und die zwischen die Aufnahmeteile (57, 58) einführbar sind.

2. Einrichtung nach Anspruch 1,
dadurch gekennzeichnet, daß die Greiferarme (11, 12) durch einen gemeinsamen Antrieb (23) schwenkbar sind.

3. Einrichtung nach Anspruch 2,
dadurch gekennzeichnet, daß der Schwenkantrieb (23) durch eine Zahnstange gebildet ist, die in Zahnab schnitte (24) der Wellen (22) der Greiferarme (11, 12) eingreift.

4. Einrichtung nach Anspruch 2 oder 3,
dadurch gekennzeichnet, daß der Schwenkantrieb (23) in einer Lagerbrücke (13) angeordnet ist, in der die beiden Wellen (22) der Greiferarme (11, 12) drehbar gelagert sind.

5. Einrichtung nach Anspruch 4,
dadurch gekennzeichnet, daß die Lagerbrücke (13) an dem Ständer (2) der Bearbeitungsmaschine fest angeordnet ist.

6. Einrichtung nach Anspruch 4,
dadurch gekennzeichnet, daß die Lagerbrücke (13) am Ständer (2) vertikal verfahrbar ist.

7. Einrichtung nach Anspruch 6,
dadurch gekennzeichnet, daß die Lagerbrücke (13) an der vertikal verfahrbaren Antriebseinheit (5) befestigt ist.

8. Einrichtung nach einem der Ansprüche 1 bis 7,
dadurch gekennzeichnet, daß der Schwenkbewegung der Greiferarme (11, 12) eine in entgegengesetzter Richtung erfolgende Drehbewegung der Halterung (10) überlagert ist.

9. Einrichtung nach Anspruch 8,
dadurch gekennzeichnet, daß die Drehbewegung der Halterung (10) von der Schwenkbewegung der Greiferarme (11, 12) abgeleitet ist.

10. Einrichtung nach Anspruch 8 oder 9,
dadurch gekennzeichnet, daß die Drehbewegung der Halterung (10) durch einen Zahnriementrieb (28 bis 30) erfolgt, der die Welle (25) der Halterung (10) mit der Welle (22) des jeweiligen Greiferarmes (11, 12) verbindet.

11. Einrichtung nach einem der Ansprüche 1 bis 10,
dadurch gekennzeichnet, daß die Wellen (22) der Greiferarme (11, 12) zur Höhenverstellung der Greiferarme und der Halterungen (10) axial verschiebbar sind.

12. Einrichtung nach Anspruch 11,
dadurch gekennzeichnet, daß auf den Wellen (22) der Greiferarme (11, 12) jeweils ein Kolben (34) sitzt, der in einem Hydraulik-Zylindergehäuse (35) liegt.

13. Einrichtung nach Anspruch 11 oder 12,
dadurch gekennzeichnet, daß die Wellen (22) der Greiferarme (11, 12) gegen Federkraft axial nach unten verschiebbar sind.

14. Einrichtung nach Anspruch 13,
dadurch gekennzeichnet, daß auf den über die Hydraulik-Zylindergehäuse (35) ragenden Enden (37) der Wellen (22) der Greiferarme (11, 12) Druckfedern (38), vorzugsweise Tellerfederpakete, sitzen.

15. Einrichtung nach einem der Ansprüche 1 bis 14,
dadurch gekennzeichnet, daß die Griffleisten (53, 54) an Platten (51, 52) vorgesehen sind, die von einem Träger (50) der Halterung (10) nach unten abstehen.

16. Einrichtung nach Anspruch 15,
dadurch gekennzeichnet, daß die Griffleisten (53, 54) in Richtung zueinander über die Platten (51, 52) ragen.

17. Einrichtung nach Anspruch 15 oder 16,
dadurch gekennzeichnet, daß jede Platte (51, 52) zwei mit Abstand übereinanderliegende Griffleisten (53, 55 und 54, 56) aufweist.

18. Einrichtung nach einem der Ansprüche 1 bis 17, dadurch gekennzeichnet, daß die Aufnahmeteile (57, 58) der Werkzeugspindelträger (6) einen Auflagerteil (60) aufweisen, der in Hängelage der Werkzeugspindelträger (6) auf den Griffleisten (53, 54) aufliegt.

19. Einrichtung nach Anspruch 18, dadurch gekennzeichnet, daß die Auflagerteile (60) kegelstumpfförmig ausgebildet sind.

20. Einrichtung nach einem der Ansprüche 17 bis 19, dadurch gekennzeichnet, daß der Abstand zwischen übereinanderliegenden Griffleisten (53 bis 56) jeder Platte (51, 52) größer ist als die Höhe der Auflagerteile (60).

21. Einrichtung nach einem der Ansprüche 15 bis 20, dadurch gekennzeichnet, daß die Auflagerteile (60) formschlüssig in den Griffleisten (53, 54) gehalten sind.

22. Einrichtung nach Anspruch 21, dadurch gekennzeichnet, daß die Griffleisten (53, 54) Vertiefungen (63) zur formschlüssigen Aufnahme der Auflagerteile (60) aufweisen.

23. Einrichtung nach einem der Ansprüche 1 bis 22, dadurch gekennzeichnet, daß die Aufnahmeteile (57, 58) jeweils eine weitere Lagesicherung (59) aufweisen.

Fig.1

III

II

14
13
11
5
10
8
2
7
7
6
15
1
3
4

EP 0 401 719 A2

# F i g.2

F i g.3

# Fig.4

F i g.5

2

11

6

13

12

6

F i g.6

2

6

11

12

6

Fig.7

Fig.8

EP 0 401 719 A2

Fig.9

Fig.10